# EUROPÄISCHE PATENTSCHRIFT

(11) **EP 0 974 499 B1**
(45) Veröffentlichungstag und Bekanntmachung des Hinweises auf die Patenterteilung: **15.09.2004**
(21) Anmeldenummer: 99114156.5
(22) Anmeldetag: 21.07.1999
(51) Int. Cl.: B60R 21/20, B60R 16/02

(54) **Airbagmodul mit Hupenfolie**
Airbag module with membrane horn switch
Module de coussin gonflable comportant un contacteur d'avertisseur à membrane

(30) Priorität: 24.07.1998 DE 29813240 U
(43) Veröffentlichungstag der Anmeldung: 26.01.2000
(73) Patentinhaber: TRW Automotive Safety Systems GmbH, 63743 Aschaffenburg (DE)
(72) Erfinder: Bossler, Hans-Jürgen, 64839 Münster (DE); Gehlert, Stefan, 97816 Rupptershütten (DE); Nigrin, Anke, 97816 Lohr (DE); Wissel, Willi, 63825 Blankenbach (DE)
(74) Vertreter: Degwert, Hartmut, Dipl.-Phys.

(56) Entgegenhaltungen:
- EP-A- 0 811 531
- EP-A- 0 819 583
- US-A- 5 499 841

## Beschreibung

Die Erfindung betrifft ein Airbagmodul für ein Kraftfahrzeuglenkrad mit einem Gasgenerator mit Zünder, einem zusammengefalteten Gassack, einem Montageblech, einem Gehäuse mit Zwischenabdeckung, einer äußeren, an die Lenkradumgebung optisch und haptisch angepaßten Abdeckkappe sowie mit einer durch Druck auf die Abdeckkappe zu betätigenden Hupenfolie.

Bei derartigen Airbag-Modulen ergeben sich regelmäßig erhebliche Schwierigkeiten bei der Einhaltung vorgegebener Abstände, die zur Betätigung der Hupe überwunden werden müssen, weil daran eine Mehrzahl von Bauteilen aus unterschiedlichen Materialien beteiligt ist und weil sich je für sich tolerierbare Abweichungen von den Fertigungssollmaßen addieren können.

Sind die Abstände im Betätigungsbereich der Abdeckkappe nur an einer Stelle zu groß, kann das Hupsignal mit dem gewohnten Anpreßdruck nicht ausgelöst werden, so daß der Fahrer einen zweiten Versuch mit größerem Anpreßdruck unternehmen muß. Dadurch wird das Hupsignal verzögert ausgelöst und eine Verkehrsgefährdung herbeigeführt oder vergrößert.

Sind die Abstände zu klein, kann das Hupsignal leicht ungewollt oder durch Fahrzeugschwingungen ausgelöst werden und zu einer Irritation des Fahrers und anderer Verkehrsteilnehmer führen.

Es sind zwar schon verschiedene Maßnahmen vorgeschlagen worden, um vorgegebene Betätigungswege zur Auslösung des Hupsignals mit nur geringen Toleranzen auf den Sollwert einzustellen, sie sind aber meist zu aufwendig, zu unzuverlässig und unter Berücksichtigung von Temperatureinflüssen und Materialermüdung über die Dauer einer üblichen Fahrzeugnutzung nicht ausreichend betriebssicher.

Aus der US-A-5 499 841 ist ein Airbagmodul für ein Kraftfahrzeuglenkrad bekannt, das einen Gasgenerator, einen zusammengefalteten Gassack, ein Montageblech, ein Gehäuse mit Zwischenabdeckung, eine äußere Abdeckkappe sowie eine durch Druck auf die Abdeckkappe zu betätigende Hupenanordnung aufweist. Die Hupenanordnung weist zwei parallel zueinander angeordnete Schichten aus elektrisch leitendem Material auf, die zwischen der Abdeckkappe und der Zwischenabdeckung angeordnet sind. Die Abdeckkappe weist in Richtung der Hupenanordnung weisende Vorsprünge auf, die über den gesamten Betätigungsbereich der Hupenanordnung etwa gleich große Betätigungsabstände schaffen.

Es besteht somit die Aufgabe, bei einem Airbagmodul der eingangs genannten Art dafür zu sorgen, daß eng tolerierbare Abstände für die Hupbetätigung realisiert werden können, ohne daß die vorgenannten Nachteile auftreten. Insbesondere soll unter Berücksichtigung der notwendigen elastischen Rückstellkräfte für die Betätigungseinrichtung gewährleistet werden können, daß unter allen vorkommenden äußeren Bedingungen ein gewohnheitsmäßig eingeübter Betätigungsabstand eingehalten werden kann, so daß durch Abweichungen davon keine zusätzliche Verkehrsgefährdung herbeigeführt wird.

Diese Aufgabe wird durch ein Airbagmodul für ein Kraft-fahrzeuglenkrad mit den Merkmalen von Anspruch 1 gelost.

Das zwischengeschaltete, flächige Betätigungselement hat den Vorteil, daß die Hupenfolie empfehlungsgemäß in einer Ebene angeordnet werden kann und daß insoweit keine Rücksicht auf die Innenkontur der Abdeckkappe genommen werden muß. Auf der anderen Seite kann die Abdeckkappe so geformt werden, wie es ihren sonstigen Anforderungen am besten entspricht, ohne daß eine Anpassung an die Anordnung der Hupenfolie erfolgen muß. Die Vorgaben zur Anordnung und Formgebung von Hupenfolie und Abdeckkappe lassen sich mit anderen Worten durch das erfindungsgemäße zwischengeschaltete Betätigungselement entkoppeln. Außerdem ist man bei der Gestaltung des Betätigungselements hinsichtlich Materialauswahl nicht eingeengt und kann mit einfachen Mitteln über den gesamten Betätigungsbereich gleichmäßige Abstände realisieren.

Zweckmäßige Ausgestaltungen des Erfindungsgedankens und deren Vorteile ergeben sich aus den Unteransprüchen. Weitere Einzelheiten werden anhand des in den Figuren 1 bis 3 dargestellten Ausführungsbeispiels näher erläutert. Es zeigen:
Fig. 1 ein Ausführungsbeispiel der Erfindung im Schnitt
Fig. 2 eine Ansicht des Gehäuses für das Airbag-Modul mit ausgeklappten Abschnitten des Betätigungselements
Fig. 3 eine Schnittdarstellung des Ausführungsbeispiels gemäß Fig. 1 mit getrennt dargestellten Bauteilen.

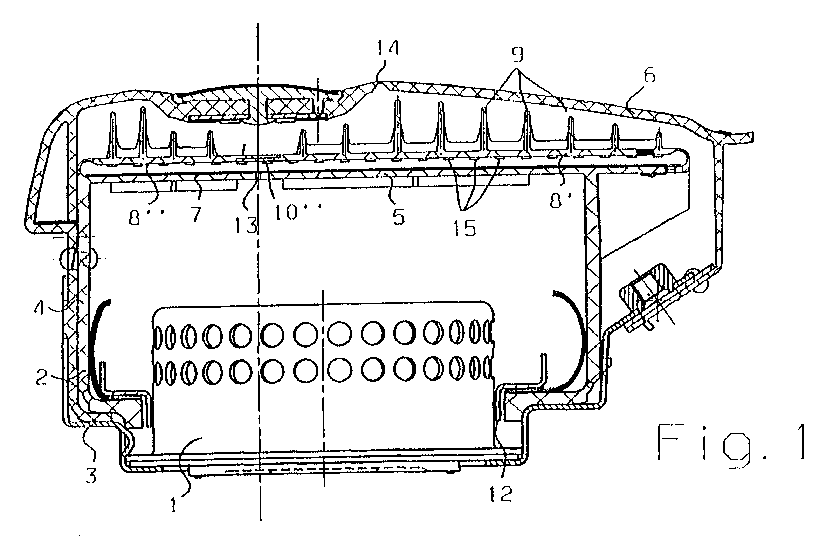

Das Airbag-Modul für ein Kraftfahrzeuglenkrad gemäß Fig. 1 umfaßt einen Gasgenerator 1 mit Zünder, einen nur ansatzweise dargestellten zusammengefalteten Gassack 2, ein Montageblech 3, ein Gehäuse 4 und eine äußere, an die Lenkradumgebung optisch und haptisch angepaßte Abdeckkappe 6.

Gehäuse 4 und Abdeckkappe 6 sind in bekannter Weise mit dem Montageblech 3 verbunden, das seinerseits am Lenkradskelett befestigt wird. Das Gehäuse 4 besteht aus einem topfförmigen Hauptteil, in dem der zusammengefaltete Gassack 2 untergebracht ist und das nach oben mit einer Zwischenabdeckung 5 ausgestattet ist, die in montiertem Zustand auf dem zusammengefalteten Gassack 2 aufliegt. Auf dieser Zwischenabdeckung 5 ist eine Hupenfolie 7 angeordnet, die in an sich bekannter Weise durch einen Druck auf die Abdeckkappe 6 zur Auslösung eines Hupsignals aktiviert werden kann. Zwischen Abdeckkappe 6 und Hupenfolie 7 ist ein flächiges Betätigungselement 8 vorgesehen, das in definiertem überall gleichem Abstand zur Hupenfolie 7 angeordnet ist und das mit Abstandshaltern 9 in Form von Stiften oder Stegen ausgestattet ist. Auf diese Weise wird erfindungsgemäß zwischen der Abdeckkappe 6 und der Hupenfolie 7 ein überall etwa gleich großer Betätigungsabstand geschaffen.

Auf der der Zwischenabdeckung gegenüberliegenden Seite des Gehäuses 4 ist eine Aufnahmeöffnung 12 für den Gasgenerator 1 vorgesehen.

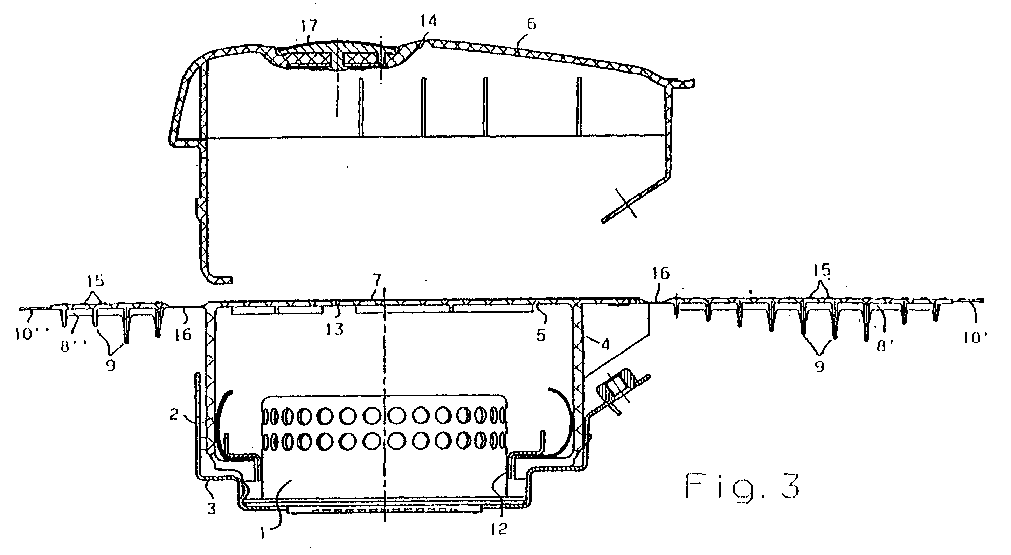

Beim dargestellten Ausführungsbeispiel ist das Betätigungselement 8 einstückig mit den Abstandshaltern 9 und der Zwischenabdeckung aus Kunststoff hergestellt, wobei die flächigen Bereiche 8' und 8" des Betätigungselementes 8 durch Umklappen um 180° aus der Herstellungsform gemäß Fig. 3 in die dargestellte Funktionsposition umgeklappt sind. Die Ränder 10', 10'' der flächigen Abschnitte 8', 8'' liegen nach dem Umklappen oberhalb der in der Zwischenabdeckung 5 vorgesehenen Sollbruchlinie 13 und sind miteinander verbunden. Auch in der Abdeckkappe 6 ist eine Sollbruchlinie 14 vorgesehen. Die der Hupenfolie 7 zugewandte Oberfläche des Betätigungselementes 8 ist zweckmäßigerweise mit voneinander gleichmäßig beabstandeten Betätigungsnoppen 15 ausgestattet.

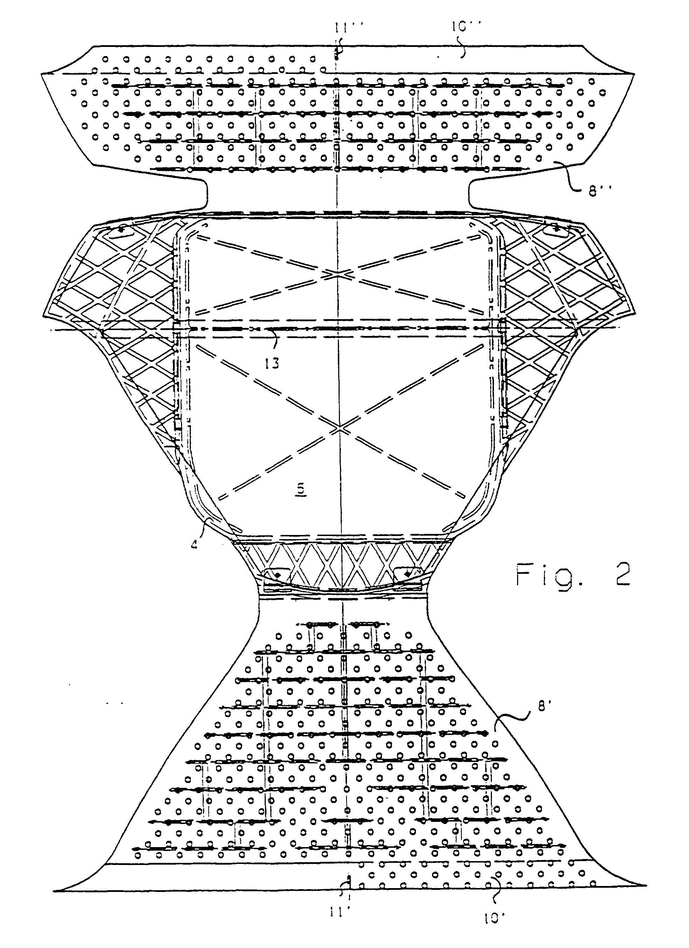

Fig. 2 zeigt eine Ansicht des einstückig hergestellten Kunststoffbauteils, das das Gehäuse 4, die Zwischenabdeckung 5 und die nach innen umklappbaren Bereiche 8', 8" des Betätigungselementes 8 umfaßt. In der Zwischenabdeckung 5 ist eine quer über die Gehäusebreite verlaufende Sollbruchlinie 13 vorgesehen. Die Ränder 10', 10'' weisen Schlitze 11', 11'' auf, so daß sie ineinander steckbar sind, wobei die Ränder 10', 10'' zu beiden Seiten von der Mitte alternierend überlappend angeordnet sind.

In Fig. 3 ist das Ausführungsbeispiel gemäß Fig. 1 in zwei Baugruppen unterteilt dargestellt. Die erste Baugruppe umfaßt die Abdeckkappe 6 mit Sollbruchlinie 14 und integriertem Fahrzeugemblem 17. Die Abdeckkappe 6 ist aus Kunststoff hergestellt und besitzt in an sich bekannter Weise randseitig angeformte Stege oder dergl., über die sie mit der zweiten Baugruppe verbindbar ist.

Die zweite Baugruppe umfaßt den Gasgenerator 1, den Gassack 2, das Montageblech 3 und das Gehäuse 4 mit Montageöffnung 12 für den Gasgenerator 1. Das Gehäuse 4 ist, wie bereits beschrieben, aus Kunststoff hergestellt und mit der einstückig angeformten Zwischenabdeckung 5 sowie den Abschnitten 8', 8" des Betätigungselementes 8 ausgestattet. In der Zwischenabdeckung ist die bereits erwähnte Sollbruchlinie 13 vorgesehen. Die Abschnitte 8', 8'' werden bei der Herstellung in einer Ebene mit der Zwischenabdeckung 5 ausgeformt und später längs der Faltlinien 16 um 180° umgeklappt, so daß die Betätigungsnoppen 15 der Hupenfolie 7 und die einstückig angeformten Abstandshalter 9 der Abdeckkappe 6 gegenüberliegen, wie aus Fig. 1 ersichtlich.

Damit ist ein Airbag-Modul geschaffen, das allen eingangs genannten Forderungen entspricht und das in einfacher Weise aus wenigen Einzelbauteilen hergestellt werden kann.

## Patentansprüche

1. Airbagmodul für ein Kraftfahrzeuglenkrad mit einem Gasgenerator (1) mit Zünder, einem zusammengefalteten Gassack (2), einem Montageblech (3), einem Gehäuse (4) mit Zwischenabdeckung (5), einer äußeren, an die Lenkradumgebung optisch und haptisch angepaßten Abdeckkappe (6) sowie mit einer durch Druck auf die Abdeckkappe (6) zu betätigenden Hupenfolie (7), wobei zwischen der Hupenfolie (7) und der Abdeckkappe (6) ein flächiges Betätigungselement (8) aus Kunststoff vorgesehen ist, das in definiertem, überall gleichem Abstand zu der sich im wesentlichen in einer Ebene erstreckenden Hupenfolie (7) angeordnet ist, wobei zwischen dem Betätigungselement (8) und der Abdeckkappe (6) Abstandshalter (9) in Form von Stiften oder Stegen vorgesehen sind, um zwischen dem Betätigungselement (8) und der Abdeckkappe (6) zumindest über den gesamten Betätigungsbereich überall etwa gleich große Betätigungsabstände zu schaffen, und wobei die Abstandshalter (9) einstückig mit dem Betätigungselement (8) ausgebildet sind.

2. Airbagmodul nach Anspruch 1, **dadurch gekennzeichnet, daß** die Zwischenabdeckung (5) aus Kunststoff besteht und daß das Betätigungselement (8) einstückig mit der Zwischenabdeckung (5) ausgebildet und durch Umklappen um 180° in die Montageendposition bringbar ist.

3. Airbagmodul nach Anspruch 2, **dadurch gekennzeichnet, daß** das Betätigungselement (8) aus zwei flächigen Abschnitten (8', 8'') besteht, die an zwei gegenüberliegenden Seiten der Zwischenabdeckung (5) angeformt sind und deren äußere Ränder (10', 10'') nach dem Umklappen um 180° miteinander verbindbar sind.

4. Airbagmodul nach Anspruch 3, **dadurch gekennzeichnet, daß** die äußeren Ränder (10', 10'') in der Montageendposition einander überlappend angeordnet sind.

5. Airbagmodul nach Anspruch 4, **dadurch gekennzeichnet, daß** die äußeren Ränder (10', 10'') etwa in der Mitte je einen sich senkrecht nach innen erstreckenden Schlitz (11', 11'') aufweisen und daß die Ränder (10', 10'') über die Schlitze (11', 11'') derart ineinander steckbar sind, daß die Ränder (10', 10'') zu beiden Seiten von der Mitte alternierend überlappend angeordnet sind.

6. Airbagmodul nach Anspruch 5, **dadurch gekennzeichnet, daß** an den Rändern der flächigen Abschnitte mehrere Steckschlitze und dementsprechend mehrere alternierende Überlappungsbereiche vorgesehen sind.

7. Airbagmodul nach einem der Ansprüche 1 bis 6, **dadurch gekennzeichnet, daß** das Gehäuse (4) aus Kunststoff besteht und daß die Zwischenabdeckung (5) einstückig mit dem Gehäuse (4) ausgebildet ist.

8. Airbagmodul nach Anspruch 7, **dadurch gekennzeichnet, daß** die Rückwand des Gehäuses (4) eine Aufnahmeöffnung (12) für den Gasgenerator (1) aufweist und daß die Zwischenabdeckung (5) mit einer Sollbruchlinie (13) ausgestattet ist.

9. Airbagmodul nach einem der Ansprüche 1 bis 8, **dadurch gekennzeichnet, daß** die Hupenfolie (7) sich über die Zwischenabdeckung (5) erstreckend angeordnet und randseitig an der Zwischenabdeckung (5) und/oder am Gehäuse (4) befestigt ist.

10. Airbagrnodul nach einem der Ansprüche 1 bis 9, **dadurch gekennzeichnet, daß** die Abdeckkappe (6) eine Sollbruchlinie (14) aufweist und randseitig mit dem Gehäuse (4) und/oder mit dem Montageblech (3) verbunden ist.

11. Airbagmodul nach einem der Ansprüche 1 bis 10, **dadurch gekennzeichnet, daß** das Montageblech (3) zur Aufnahme des Gasgenerators (1) und zur Befestigung des Airbag-Moduls im Lenkrad ausgebildet ist.

12. Airbagmodul nach einem der Ansprüche 1 bis 11, **dadurch gekennzeichnet, daß** sich Zwischenabdeckung (5), Hupenfolie (7) und Betätigungselement (8) im wesentlichen über die gesamte unterhalb der Abdeckkappe (6) verfügbare Fläche erstrecken.

13. Airbagmodul nach einem der Ansprüche 1 bis 12, **dadurch gekennzeichnet, daß** die im Montageendzustand der Hupenfolie (7) zugewandte Oberfläche des Betätigungselements (8) mit voneinander gleichmäßig beabstandeten Betätigungsnoppen (15) ausgestattet ist.

## Claims

1. An airbag module for a motor vehicle steering wheel, comprising a gas generator (1) having an igniter, a folded gas bag (2), an assembly plate (3), a housing (4) with an intermediate cover (5), an outer cover cap (6) optically and haptically adapted to the steering wheel surroundings, and a horn foil (7) to be actuated by pressure exerted on the cover cap (6), a planar actuating element (8) made of plastic being provided between the horn foil (7) and the cover cap (6), the actuating element (8) being disposed at a defined constant distance from the horn foil (7) extending substantially in one plane, spacers (9) in the form of pins or webs being provided between the actuating element (8) and the cover cap (6) to provide approximately equal actuation distances between the actuating element (8) and the cover cap (6) at least across the entire actuating area, and the spacers (9) being formed integrally with the actuating element (8).

2. The airbag module according to claim 1, **characterized in that** the intermediate cover (5) is made of plastic and that the actuating element (8) is formed integrally with the intermediate cover (5) and may be brought into its final assembly position by folding it by 180°.

3. The airbag module according to claim 2, **characterized in that** the actuating element (8) consists of two flat sections (8', 8") which are each formed as part of the intermediate cover (5) on two opposed sides thereof, and have outer rims (10', 10") that can be connected to each other after the folding by 180°.

4. The airbag module according to claim 3, **characterized in that** the outer rims (10', 10") are arranged so as to overlap each other in the final assembly position.

5. The airbag module according to claim 4, **characterized in that** the outer rims (10', 10") each have a slot (11', 11") extending perpendicularly inwards, approximately in the center, and that the rims (10', 10") can be inserted into each other via the slots (11', 11") in such a way that the rims (10', 10") are arranged in an alternating overlapping pattern to both sides from the center.

6. The airbag module according to claim 5, **characterized in that** a plurality of insertion slots and correspondingly a plurality of alternating overlapping areas are provided at the rims of the flat sections.

7. The airbag module according to any of claims 1 to 6, **characterized in that** the housing (4) is made of plastic and that the intermediate cover (5) is formed integrally with the housing (4).

8. The airbag module according to claim 7, **characterized in that** the rear wall of the housing (4) has an opening (12) to accommodate the gas generator (1), and that the intermediate cover (5) is provided with a predetermined breaking line (13).

9. The airbag module according to any of claims 1 to 8, **characterized in that** the horn foil (7) is arranged so as to extend over the intermediate cover (5) and is attached at its rim to the intermediate cover (5) and/or to the housing (4).

10. The airbag module according to any of claims 1 to 9, **characterized in that** the cover cap (6) has a predetermined breaking line (14) and is connected at its rim to the housing (4) and/or to the assembly plate (3).

11. The airbag module according to any of claims 1 to 10, **characterized in that** the assembly plate (3) is designed to receive the gas generator (1) and to fasten the airbag module in the steering wheel.

12. The airbag module according to any of claims 1 to 11, **characterized in that** the intermediate cover (5), the horn foil (7), and the actuating element (8) extend substantially across the entire surface available beneath the cover cap (6).

13. The airbag module according to any of claims 1 to 12, **characterized in that** the surface of the actuating element (8) facing the horn foil (7) in the final assembly state is provided with actuating knobs (15) equidistantly spaced from each other.

## Revendications

1. Module d'airbag pour un volant de direction de véhicule, comportant un générateur de gaz (1) avec amorce, un coussin à gaz (2) plié, une tôle de montage (3), un boîtier (4) avec couvercle intermédiaire (5), un capuchon (6) extérieur adapté du point de vue optique et tactile à l'environnement du volant, ainsi qu'une feuille de klaxon (7) à actionner par pression sur le capuchon, et entre la feuille de klaxon (7) et le capuchon (6) étant prévu un élément d'actionnement (8) plat en matière plastique qui est agencé à une distance définie et constante par rapport à la feuille de klaxon (7) s'étendant sensiblement dans un plan, et entre l'élément d'actionnement (8) et le capuchon (6) étant prévus des écarteurs (9) sous forme de pointes ou de barrettes pour fournir, entre l'élément d'actionnement (8) et le capuchon (6) au moins sur toute la zone d'actionnement, des écartements d'actionnement partout approximativement de même taille, et les écarteurs (9) étant réalisés d'un seul tenant avec l'élément d'actionnement (8).

2. Module d'airbag selon la revendication 1, **caractérisé en ce que** le couvercle intermédiaire (5) est en matière plastique et **en ce que** l'élément d'actionnement (8) est réalisé d'un seul tenant avec le couvercle intermédiaire (5) et peut être amené dans la position finale de montage en étant rabattu de 180°.

3. Module d'airbag selon la revendication 2, **caractérisé en ce que** l'élément d'actionnement (8) est constitué par deux tronçon (8', 8") plats qui sont façonnés sur deux cotés opposés du couvercle intermédiaire (5) et dont les bords extérieurs (10', 10") peuvent être reliés l'un à l'autre après le rabattement de 180°.

4. Module d'airbag selon la revendication 3, **caractérisé en ce que** les bords extérieurs (10', 10") sont agencés en se chevauchant dans la position finale de montage.

5. Module d'airbag selon la revendication 4, **caractérisé en ce que** les bords extérieurs (10', 10") présentent chacun approximativement au milieu une fente (11', 11") s'étendant perpendiculairement vers l'intérieur et **en ce que** les bords (10', 10") peuvent être enfichés l'un dans l'autre via les fentes (11', 11") de telle sorte que les bords (10', 10") sont agencés en se chevauchant en alternance des deux côtés depuis le milieu.

6. Module d'airbag selon la revendication 5, **caractérisé en ce que** sur les bords des tronçons plats sont prévues plusieurs fentes d'enfichage et, de manière correspondante, plusieurs zones de chevauchement en alternance.

7. Module d'airbag selon l'une des revendications 1 à 5, **caractérisé en ce que** le boîtier (4) est en matière plastique, et **en ce que** le couvercle intermédiaire (5) est réalisé d'un seul tenant avec le boîtier (4).

8. Module d'airbag selon la revendication 7, **caractérisé en ce que** la paroi postérieure du boîtier (4) présente une ouverture de réception (12) pour le générateur de gaz (1), et **en ce que** le couvercle intermédiaire (5) est pourvu d'une ligne destinée à la rupture.

9. Module d'airbag selon l'une des revendications 1 à 8, **caractérisé en ce que** la feuille de klaxon (7) est agencée en s'étendant sur le couvercle (5) et est fixée par son bord au couvercle intermédiaire (5) et/ou au boîtier.

10. Module d'airbag selon l'une des revendications 1 à 9, **caractérisé en ce que** le capuchon (6) présente une ligne destinée à la rupture et est relié sur son bord au boîtier (4) et/ou à la tôle de montage (3).

11. Module d'airbag selon l'une des revendications 1 à 10, **caractérisé en ce que** la tôle de montage (3) est réalisée pour recevoir le générateur de gaz (1) et pour fixer le module d'airbag dans le volant.

12. Module d'airbag selon l'une des revendications 1 à 11, **caractérisé en ce que** le couvercle intermédiaire (5), la feuille de klaxon (7) et l'élément d'actionnement (8) s'étendent sensiblement sur toute la surface disponible au-dessous du capuchon (6).

13. Module d'airbag selon l'une des revendications 1 à 12, **caractérisé en ce que** la surface de l'élément d'actionnement (8), tournée vers la feuille de klaxon (7) à l'état final de montage, est équipée de pastilles d'actionnement (15) espacées les unes des autres de manière régulière.
